# EUROPÄISCHE PATENTSCHRIFT

(11) **EP 3 619 429 B1**
(45) Veröffentlichungstag und Bekanntmachung des Hinweises auf die Patenterteilung: **06.01.2021**
(21) Anmeldenummer: 18717591.4
(22) Anmeldetag: 11.04.2018
(51) Int. Cl.: F04B 25/00, B60G 17/052, F04B 49/24

(54) **VERFAHREN ZUM BETREIBEN EINER DRUCKREGELANLAGE MIT EINEM MEHRSTUFIGEN KOMPRESSOR, SOWIE DRUCKREGELANLAGE**
METHOD FOR OPERATING A PRESSURE CONTROL SYSTEM HAVING A MULTI-STAGE COMPRESSOR, AND PRESSURE CONTROL SYSTEM
PROCÉDÉ PERMETTANT DE FAIRE FONCTIONNER UNE INSTALLATION DE RÉGULATION DE PRESSION DE GAZ MUNIE D'UN COMPRESSEUR MULTI-ÉTAGE ET INSTALLATION DE RÉGULATION DE PRESSION DE GAZ

(30) Priorität: 05.05.2017 DE 102017004361
(43) Veröffentlichungstag der Anmeldung: 11.03.2020
(73) Patentinhaber: WABCO GmbH, 30453 Hannover (DE)
(72) Erfinder: SCHARPENBERG, Jörg, 30938 Burgwedel (DE); STABENOW, Uwe, 30880 Laatzen (DE)
(74) Vertreter: Rabe, Dirk-Heinrich
(86) Internationale Anmeldenummer: PCT/EP2018/059291
(87) Internationale Veröffentlichungsnummer: WO 2018/202393

(56) Entgegenhaltungen:
- DE-A1-102008 034 240
- DE-A1-102011 083 614
- US-A1- 2014 373 718

## Beschreibung

Die Erfindung betrifft ein Verfahren zum Betreiben einer Druckregelanlage mit einem mehrstufigen Kompressor, insbesondere in einem Nutzfahrzeug, sowie eine Druckregelanlage mit einem mehrstufigen Kompressor.

Mehrstufige Kompressoren dienen dazu, eine hohe Verdichtung eines Druckmittels, insbesondere eines Gases, beispielsweise Luft, dadurch zu erreichen, dass das in einer ersten Verdichtungsstufe vorverdichtete Druckmittel in einer darauffolgenden zweiten Verdichtungsstufe zusätzlich verdichtet wird. Es können auch weitere Verdichtungsstufen in einer Kaskade vorhanden sein, in denen jeweils das von der vorhergehenden Verdichtungsstufe verdichtete Druckmittel weiter verdichtet wird.

Sollen Verbraucher beispielsweise einer Luftfederanlage oder einer Niveauregelanlage in einem Fahrzeug mit dem Druckmittel versorgt werden, kann ein derartiger mehrstufiger Kompressor verwendet werden, um das Druckmittel mit einem entsprechenden Druck zum Versorgen von Druckfedern bereitzustellen. Der mehrstufige Kompressor verdichtet dabei das in einen Ansaugraum eingeleitete Druckmittel aus der Atmosphäre über zwei oder mehrere Verdichtungsstufen und überführt das mehrstufig verdichtete Druckmittel an die Druckfedern. Alternativ kann auch ein bereits verdichtetes Druckmittel aus einem Druckmittelvorrat verwendet werden, das durch den Kompressor ein weiteres Mal verdichtet wird.

Dies ist beispielsweise in DE 10 2008 034 240 B4 beschrieben, wonach eine Niveauregelanlage vorgesehen ist, bei der ein mehrstufiger Kompressor verwendet wird, um das Druckmittel aus der Atmosphäre oder aus einem Druckmittelvorrat zu fördern, wobei zwei Verdichtungsstufen vorgesehen sind. Wird Druckmittel aus der Atmosphäre verdichtet, wird das Druckmittel durch beide Verdichtungsstufen geleitet, während bei einer Förderung des Druckmittels aus dem Druckmittelvorrat eine Verdichtung des dem Verbraucher zugeführten Druckmittels lediglich mit der zweiten Verdichtungsstufe stattfindet. Um in diesem Fall die Verdichtungsarbeit der ersten Verdichtungsstufe zu reduzieren oder zu sperren, ist ein als 2/2-Wegeventil ausgeführtes Sperrventil vorgesehen, das bei einer Förderung aus dem Druckmittelvorrat eine Förderung von verdichtetem Druckmittel aus der ersten Verdichtungsstufe zur zweiten Verdichtungsstufe verhindert. Das Sperrventil wird hierbei elektrisch über eine Steuereinrichtung angesteuert.

Die DE 103 21 771 A1 beschreibt einen mehrstufigen Kompressor, bei dem zur Abschaltung der ersten Verdichtungsstufe eine Bypassleitung mit einem pneumatisch steuerbaren Sperrventil vorgesehen ist, die einen Ansaugraum des Kompressors mit dem ersten Verdichtungsraum verbindet. Das pneumatische Sperrventil wird hierbei in Abhängigkeit des Druckes im Ansaugraum geöffnet, so dass ein Druckausgleich zwischen dem Ansaugraum und dem Verdichtungsraum stattfinden kann. Dies dient dazu, die erste Verdichtungsstufe in Abhängigkeit des Druckes des in den Ansaugraum eingelassenen Druckmittels abzuschalten. Dadurch kann in Abhängigkeit des eingelassenen Druckmittels im einstufigen Betrieb eine hohe Verdichtung bei einem geringen Volumenstrom erreicht werden. Im zweistufigen Betrieb hingegen wird ein hoher Volumenstrom erreicht und das Druckmittel durchströmt zwei Verdichtungsstufen.

Gemäß DE 10 2011 083 614 A1 ist vorgesehen, in einem offenen Betriebsmodus Luft durch zwei Verdichtungsstufen zu verdichten und die verdichtete Luft einem Druckmittelvorrat zuzuführen. In einem geschlossenen Betriebsmodus kann die bereits verdichtete Luft aus dem Druckmittelvorrat in ein Zwischenvolumen zwischen der ersten und der zweiten Verdichtungsstufe eingelassen und durch eine der Verdichtungsstufen erneut verdichtet werden, um anschließend in die Verbraucher zu gelangen. Weiterhin ist auch eine Rückführung von Luft aus den Verbrauchern in den Druckmittelvorrat vorgesehen. Zum Steuern sind elektrisch betätigte Umschaltventile vorgesehen, die entsprechend die Strömungswege für die verdichtete oder die zu verdichtende Luft sperren und freigeben.

DE 10 2012 010 390 A1 beschreibt ein Niveauregelsystem, bei dem in einem geschlossenen Betriebsmodus über einen Kompressor bereits verdichtete Luft aus einem Druckvorratsbehälter in als Federbeine ausgeführte Verbraucher zugeführt wird. Zum Steuern des Druckes im Niveauregelsystem ist eine Druckbegrenzungsfunktion vorgesehen, die entweder in Form eines Ablassventils oder in Form eines Vorsteuerventils ausgestaltet ist, die jeweils bei einem zu hohen Druck im System Luft in die Atmosphäre ablassen.

Es ist Aufgabe der Erfindung, ein Verfahren zum Betreiben einer Druckregelanlage mit einem mehrstufigen Kompressors anzugeben, das in einfacher und zuverlässiger Weise eine Verdichtungsleistung sowie einen verdichteten Volumenstrom des mehrstufigen Kompressors auf die Betriebsmodi der Druckregelanlage abstimmt. Weiterhin ist es Aufgabe der Erfindung, eine Druckregelanlage mit einem mehrstufigen Kompressor bereitzustellen.

Diese Aufgabe wird durch ein Verfahren nach Anspruch 1 sowie eine Druckregelanlage nach Anspruch 9 gelöst. Die Unteransprüche geben vorteilhafte Weiterbildungen an.

Erfindungsgemäß ist demnach vorgesehen, dass eine Verdichtungsleistung einer zweiten Verdichtungsstufe eines mehrstufigen Kompressors, insbesondere in einem geschlossenen Betriebsmodus einer Druckregelanlage, insbesondere einer Luftfederanlage in einem Fahrzeug, durch ein pneumatisch oder elektrisch steuerbares Umleitventil auf ein Minimum reduziert wird. Die Reduzierung der Verdichtungsleistung erfolgt erfindungsgemäß dadurch, dass die zweite Verdichtungsstufe umgangen wird, wobei darunter zu verstehen ist, dass ein in einer der zweiten Verdichtungsstufe vorgelagerten ersten Verdichtungsstufe verdichtetes Druckmittel um die zweite Verdichtungsstufe herumgeleitet wird. Die zweite Verdichtungsstufe wird somit pneumatisch überbrückt, so dass eine Zufuhr von verdichtetem Druckmittel in die zweite Verdichtungsstufe verhindert wird sobald eine entsprechende Ansteuerung des Umleitventils erfolgt.

Bei einer Reduzierung der Verdichtungsleistung der zweiten Verdichtungsstufe auf ein Minimum liegt daher eine Volumenstrombegrenzung auf eine Durchflussrate von null aus der zweiten Verdichtungsstufe vor. D.h. es wird ein pneumatisch vollständiges Abschalten der zweiten Verdichtungsstufe erreicht; die zweite Verdichtungsstufe trägt somit zu einer Gesamt-Verdichtungsleistung des mehrstufigen Kompressors - insbesondere im geschlossenen Betriebsmodus - nicht mehr bei, so dass der Anteil der zweiten Verdichtungsstufe am Energieverbrauch des mehrstufigen Kompressors lediglich auf Reibungsverluste sowie die Verdichtung des nach dem Umschalten des Umleitventils in der zweiten Verdichtungsstufe verbliebenen Druckmittels minimiert wird.

Dadurch kann bereits der Vorteil erreicht werden, dass die Verdichtungsleistung der zweiten Verdichtungsstufe bei einem Umschalten in den geschlossenen Betriebsmodus der Druckregelanlage, die mit dem mehrstufigen Kompressor betrieben wird, in einfacher und zuverlässiger Weise selbstregulierend bzw. automatisch angepasst werden kann.

Als erste Verdichtungsstufe ist hierbei nicht zwangsläufig die im mehrstufigen Kompressor in Strömungsrichtung am Anfang liegende Verdichtungsstufe gemeint. Vielmehr wird darunter verstanden, dass die erste Verdichtungsstufe irgendeine Verdichtungsstufe im mehrstufigen Kompressor sein kann, auf die mindestens eine weitere Verdichtungsstufe - die zweite Verdichtungsstufe - folgt, wobei die zweite Verdichtungsstufe nicht zwangsläufig direkt an die im Sinne der Erfindung erste Verdichtungsstufe angrenzen muss. Die zweite Verdichtungsstufe ist somit dadurch definiert, dass sie in Strömungsrichtung hinter der ersten Verdichtungsstufe liegt, wobei die zweite Verdichtungsstufe dabei auch nicht zwangsläufig als die letzte Verdichtungsstufe des mehrstufigen Kompressors anzusehen ist.

In einem offenen Betriebsmodus der Druckregelanlage wird von dem mehrstufigen Kompressor Druckmittel, beispielsweise über eine Ansaugleitung bereitgestellte Ansaugluft aus der Atmosphäre, von der ersten Verdichtungsstufe vorverdichtet, beispielsweise auf einen Zwischendruck von 5-6bar bei einem Stabilisierungsdruck der ersten Verdichtungsstufe von beispielsweise 10-15bar, und in ein Zwischenvolumen eingeleitet. Von dort gelangt die vorverdichtete Luft in die zweite Verdichtungsstufe, in der sie weiter verdichtet wird, beispielsweise auf einen Enddruck von 20bar, und aus der sie über einen Lufttrockner in ein oder mehrere Verbraucher, beispielsweise Luftfedern der Druckregelanlage, und/oder in einen Druckmittelvorrat gelangt. Somit wird die Gesamt-Verdichtungsleistung im offenen Betriebsmodus in diesem Beispiel durch diese beiden Verdichtungsstufen bestimmt.

Der geschlossene Betriebsmodus wird insbesondere dann eingestellt, wenn eine Versorgung der Verbraucher der Druckregelanlage mit hoch-verdichtetem und/oder getrocknetem Druckmittel erfolgen soll. Dies ist insbesondere dann der Fall, wenn eine schnelle Druckbeaufschlagung der Verbraucher gewünscht ist, beispielsweise dann, wenn eine schnelle Regelung durch Bereitstellen eines hohen End-Volumenstromes aus dem mehrstufigen Kompressor in die Verbraucher, d. h. einer hohen Luftmenge pro Zeit, durch die Luftfederregelung erforderlich ist. Außerdem kann der geschlossene Betriebsmodus eingestellt werden, wenn eine Rückförderung von Druckmittel aus den Verbrauchern in den Druckmittelvorrat erfolgen soll, da auch dann eine erneute Verdichtung zu gewährleisten ist.

Zum Umschalten von dem offenen Betriebsmodus in den geschlossenen Betriebsmodus wird beispielsweise ein Schaltventil, das den Druckmittelvorrat oder die Verbraucher mit einer Aufladeleitung verbindet, elektrisch gesteuert geöffnet, so dass ein bereits verdichtetes Druckmittel, im Folgenden Aufladedruckmittel genannt, in die Aufladeleitung einströmen kann. Das Aufladedruckmittel kann das im Druckmittelvorrat gespeicherte Druckmittel, das bereits auf einen Vorratsdruck verdichtet wurde, sein. Soll hingegen im geschlossenen Betriebsmodus eine Rückförderung von bereits verdichtetem Druckmittel aus den Verbrauchern, im Folgenden Kammerdruckmittel genannt, in den Druckmittelvorrat erfolgen, so ist stattdessen das Kammerdruckmittel das Aufladedruckmittel, das in die Aufladeleitung eingelassen wird. Dazu sind für die Verbraucher und den Druckmittelvorrat vorzugsweise zwei getrennte Schaltventile vorgesehen, die das jeweilige Einströmen in die Aufladeleitung steuern.

Über die Aufladeleitung gelangt das Aufladedruckmittel erfindungsgemäß in die erste Verdichtungsstufe. Am Übergang von der Aufladeleitung zur ersten Verdichtungsstufe herrscht hierbei in etwa ein Aufladedruck des Aufladedruckmittels, der gegenüber dem Druck in den Verbrauchern bzw. dem Druckmittelvorrat etwas verringert ist, da diese Drücke durch das Durchströmen des Schaltventils sowie der Aufladeleitung abfallen. Ausgehend von diesem Aufladedruck wird das bereits verdichtete Aufladedruckmittel in der ersten Verdichtungsstufe zusätzlich verdichtet und gelangt anschließend in das Zwischenvolumen, in dem auch das Umschaltventil angeordnet ist.

Durch das Einleiten des bereits verdichteten Aufladedruckmittels in die erste Verdichtungsstufe kann dieses vorteilhafterweise sehr effizient zusätzlich verdichtet werden, da in der ersten Verdichtungsstufe ein großer Hubraum bzw. Verdichtungsraum zur Verfügung steht. Im Vergleich zu einer herkömmlichen Ausführung des mehrstufigen Kompressors, bei der das Aufladedruckmittel in die zweite Verdichtungsstufe eingelassen wird, die bei einem zweistufigen Kompressor einen kleinen Hubraum bzw. Verdichtungsraum aufweist, um die zulässige Antriebsleistung im offenen Betriebsmodus nicht zu überschreiten, kann die erste Verdichtungsstufe mit einem deutlich größeren Hubraum ausgelegt werden und erzeugt somit einen größeren Volumenstrom, insbesondere im Zusammenhang mit der erfindungsgemäßen Abschaltung der zweiten Verdichtungsstufe.

Sobald das hochverdichtete Aufladedruckmittel in die erste Verdichtungsstufe gelangt, wird gleichzeitig bewirkt, dass die im offenen Betriebsmodus in die erste Verdichtungsstufe einzuleitende Ansaugluft aus der Atmosphäre nicht in die erste Verdichtungsstufe gelangt, da der Aufladedruck höher als der Umgebungsdruck ist. Dazu wird die Ansaugluft vorzugsweise über ein Rückschlagventil in die erste Verdichtungsstufe eingeleitet. Sobald das Aufladedruckmittel mit einem hohen Aufladedruck in die erste Verdichtungsstufe bzw. einen Ansaugraum der ersten Verdichtungsstufe gelangt, wird ein Öffnen dieses Rückschlagventils und somit ein Einströmen von Ansaugluft in die erste Verdichtungsstufe verhindert, da in der ersten Verdichtungsstufe nun der höhere Ansaugdruck von beispielsweise 5bar oder mehr herrscht. Dadurch kann gewährleistet werden, dass der Trocknungsgrad des Aufladedruckmittels beibehalten wird und sich durch die Ansaugluft nicht verschlechtert. Im offenen Betriebsmodus wird ein Öffnen des Rückschlagventils nicht verhindert, da im Ansaugraum während des Ansaugens ein geringerer Druck herrscht, und die Ansaugluft kann ungehindert einströmen.

Das im Zwischenvolumen angeordnete Umleitventil ist derartig ausgeführt, dass es im geschlossenen Betriebsmodus derartig umgeschaltet werden kann, dass das in der ersten Verdichtungsstufe zusätzlich verdichtete Aufladedruckmittel - im Folgenden Verdichtungsdruckmittel genannt - aus dem Zwischenvolumen nicht wie im offenen Betriebsmodus in die zweite Verdichtungsstufe gelangt sondern die zweite Verdichtungsstufe umgangen wird. Dazu kann eine pneumatische Umgehungsleitung vorgesehen sein, die an einem Ausgang des Umleitventils, das vorzugsweise als 3/2-Wegeventil ausgeführt ist, angeordnet ist und nach der zweiten Verdichtungsstufe wieder in den Förderweg des mehrstufigen Kompressors gelangt. Dazu kann die Umgehungsleitung beispielsweise an eine zum Druckmittelvorrat oder den Verbrauchern führende Auslassleitung oder an eine nachgelagerte Verdichtungsstufe des mehrstufigen Kompressors angekoppelt sein. Die Umgehungsleitung überbrückt somit die zweite Verdichtungsstufe.

Der weitere Ausgang des 3/2-Wegeventils (Umleitventil) ist mit der zweiten Verdichtungsstufe verbunden, so dass das vorverdichtete Druckmittel im offenen Betriebsmodus bei entsprechender Stellung des Umleitventils in die zweite Verdichtungsstufe eingeleitet werden kann. Das Umleitventil steuert somit, ob die erste Verdichtungsstufe über das Zwischenvolumen mit der zweiten Verdichtungsstufe verbunden ist oder nicht.

Somit kann das von der ersten Verdichtungsstufe bereitgestellte Verdichtungsdruckmittel im geschlossenen Betriebsmodus oder das von der ersten Verdichtungsstufe bereitgestellte vorverdichtete Druckmittel im offenen Betriebsmodus je nach Schaltstellung des Umleitventils an den entsprechenden Ausgang ausgegeben werden.

Zum Umschalten des Umleitventils ist gemäß einer Ausführungsform vorgesehen, das Aufladedruckmittel beispielsweise über eine von der Aufladeleitung abzweigende pneumatische Steuerleitung auch zu einem pneumatischen Steuereingang des in dem Fall pneumatisch gesteuerten Umleitventils zu leiten. Im geschlossenen Betriebsmodus herrscht somit ein Aufladedruck in der Steuerleitung, durch den das Umleitventil so umgeschaltet wird, dass das Verdichtungsdruckmittel in die Umgehungsleitung strömen kann. Im offenen Betriebsmodus hingegen befindet sich bei geschlossenem Schaltventil kein Aufladedruckmittel in der Steuerleitung und der am pneumatischen Steuereingang herrschende Druck ist gering, so dass dieses in seiner Ursprungsstellung verbleibt bzw. wieder in seine Ursprungsstellung zurückgeht, beispielsweise durch eine Rückstellfeder, in der das vorverdichtete Druckmittel in die zweite Verdichtungsstufe gefördert wird.

Ein Umschaltdruck des Umleitventils wird hierbei derartig gewählt, dass bei üblichen Aufladedrücken von beispielsweise 4 bar ein Umschalten des Umleitventils bewirkt wird und sich das Umleitventil sonst in seiner Ursprungsstellung befindet bzw. in diese zurückgeht.

Gemäß einer alternativen Ausführungsform weist das Umleitventil eine elektrische Steuerleitung sowie einen elektrischen Steuereingang auf und die pneumatische Steuerleitung entfällt. Demnach wird beim elektrischen Umschalten des Schaltventils bzw. beim elektrischen Umschalten der Druckregelanlage in den geschlossenen Betriebsmodus gleichzeitig ein Steuersignal an den elektrischen Steuereingang des Umleitventils übermittelt. Dadurch kann das Umleitventil in dem Fall elektrisch umgeschaltet werden, um auszuwählen, ob das Verdichtungsdruckmittel in die Umgehungsleitung oder das vorverdichtete Druckmittel in die zweite Verdichtungsstufe zu fördern ist.

Vorteilhafterweise kann durch die elektrische oder durch die pneumatische Ansteuerung des Umleitventils in einfacher Weise eine automatisches bzw. selbstregulierendes Umschalten des Umleitventils erfolgen, sobald der geschlossene Betriebsmodus eingestellt wird. Daher sind keine weiteren elektronischen Schaltungen, Steuerungen oder Regelungen nötig, die dieses Umschalten bewirken. Da das Umschalten unmittelbar an die Freigabe des Aufladedruckmittels aus dem Druckmittelvorrat oder den Verbrauchern in die Aufladeleitung bzw. die erste Verdichtungsstufe gekoppelt ist, erfolgt die Umschaltung ohne zusätzlichen Aufwand und Zeitverluste.

Die Ankopplung der Umgehungsleitung nach der zweiten Verdichtungsstufe kann vorzugsweise derartig vorgesehen sein, dass das von der ersten Verdichtungsstufe bereitgestellte Verdichtungsdruckmittel in Strömungsrichtung hinter einem Lufttrockner einströmt, wobei der Lufttrockner in Strömungsrichtung hinter dem mehrstufigen Kompressor in der Auslassleitung angeordnet ist, so dass das im offenen Betriebsmodus verdichtete Druckmittel getrocknet werden kann. Da das im geschlossenen Betriebsmodus in der ersten Verdichtungsstufe verdichtete Verdichtungsdruckmittel in etwa den Trocknungsgrad des Aufladedruckmittels aufweist, das bereits im offenen Betriebsmodus vorab durch den Lufttrockner getrocknet wurde, ist eine erneute Trocknung nicht zwingend nötig und würde nur zu unnötigen Druckverlusten aufgrund des Durchströmens des Lufttrockners führen. Lediglich optional kann vorgesehen sein, die Umgehungsleitung in Strömungsrichtung vor dem Lufttrockner an die Auslassleitung zu koppeln, um das Verdichtungsdruckmittel dann erneut zu trocknen, wenn beispielsweise anzunehmen ist, dass in die erste Verdichtungsstufe ebenfalls die ungetrocknete Ansaugluft aus der Atmosphäre gelangt.

Der Hauptteil der Gesamt-Verdichtungsleistung im geschlossenen Betriebsmodus wird also durch eine Verdichtung des aus der Aufladeleitung in die erste Verdichtungsstufe eingelassenen Aufladedruckmittels erreicht. Dabei wird vorteilhafterweise automatisch die Verdichtungsleistung der zweiten Verdichtungsstufe im geschlossenen Betriebsmodus auf ein Minimum reduziert, da die zweite Verdichtungsstufe nicht mehr an der Verdichtung teilnimmt. Die Leistungsaufnahme der zweiten Verdichtungsstufe kann somit begrenzt werden, wobei sich diese Leistungsaufnahme im Wesentlichen auf die Reibungsverluste sowie die Verdichtung des nach dem Schließen des Umschaltventils in der zweiten Verdichtungsstufe verbliebenen Druckmittels beschränkt.

Die Antriebsleistung eines Motors des Kompressors wird somit verringert, der Energiebedarf sinkt und kann somit im geschlossenen Betriebsmodus hauptsächlich auf den Betrieb der ersten bzw. weiterer Verdichtungsstufen und somit des End-Volumenstromes abgestimmt werden. Zudem kann den Verbrauchern oder dem Druckmittelvorrat ein Druckmittel zugeführt werden, das eine hohe Trocknungsstufe erreicht hat, da der Anteil an nicht-getrocknetem Druckmittel, das im Wesentlichen aus der Atmosphäre gefördert wird, stark reduziert ist.

Ein Auflade-Volumenstrom des in die Aufladeleitung eingelassenen, bereits verdichteten Aufladedruckmittels, d. h. eine Luftmenge pro Zeit zur ersten Verdichtungsstufe hin, ist hierbei insbesondere abhängig von einer Nennweite des jeweiligen Schaltventils und ggf. weiterer vorgeschalteter Ventile, durch die das Aufladedruckmittel strömt. Der Auflade-Volumenstrom bestimmt wiederum auch den End-Volumenstrom des in Richtung der Verbraucher oder des Druckmittelvorrats geförderten Druckmittels. Durch die erfindungsgemäße Energieeinsparung in der zweiten Verdichtungsstufe können beide Volumenströme wie folgt höher ausgelegt werden:

Dadurch, dass die Verdichtungsleistung durch Wegschalten der zweiten Verdichtungsstufe und somit auch der Energieverbrauch eines Motors des mehrstufigen Kompressors im geschlossenen Betriebsmodus reduziert wird, kann dieser Energieübertrag bis zu einer akzeptierbaren maximalen Energiebegrenzung, insbesondere einer Strombegrenzung von beispielsweise 35 A, zum Betreiben der ersten Verdichtungsstufe zusätzlich verwendet werden. Dadurch kann beispielsweise die Nennweite des Schaltventils und somit der Auflade-Volumenstrom höher ausgelegt werden, ohne die akzeptierbare maximale Energiebegrenzung des mehrstufigen Kompressors zu übersteigen. Folglich erhöht sich eine Wirkleistung des Druckregelsystems, da bei gleicher akzeptierbarer elektrischer Leistung im geschlossenen Betriebsmodus ein deutlich erhöhter End-Volumenstrom bei gleichem Energieeinsatz gewährleistet werden kann.

Vorteilhafterweise gelangt das Aufladedruckmittel aus der Aufladeleitung durch einen weiteren Eingang mit Rückschlagventil in die erste Verdichtungsstufe bzw. deren Ansaugraum, so dass ein Ausströmen des Aufladedruckmittels in die Atmosphäre oder in eine möglicherweise vorgelagerte Verdichtungsstufe verhindert werden kann. Dadurch kann ein einfacher Aufbau sowie Betrieb der Druckregelanlage erreicht werden, da das unverdichtete Druckmittel bzw. die Ansaugluft im offenen Betriebsmodus und das Aufladedruckmittel im geschlossenen Betriebsmodus an unterschiedlichen Eingängen in den mehrstufigen Kompressor eingeleitet werden und somit kein Umschalten der Druckmittelquelle der ersten Verdichtungsstufe nötig ist.

Zusammenfassend ist somit mit einem elektrisch oder pneumatisch gesteuerten Umleitventil ein einfacher und kostengünstiger Aufbau der Druckregelanlage realisierbar, mit dem sich der Wirkungsgrad des Kompressors optimal abstimmen lässt, d. h. ein hoher Auflade-Volumenstrom durch Vergrößerung der Nennweite insbesondere des Schaltventils bei einem gleichzeitig festlegbaren maximalen Energieverbrauch und einem trockenen Verdichtungsdruckmittel. Ohne diese Auslegung würde die Energie im System erhöht werden und zusätzlich ein nicht nachvollziehbarer Trocknungsgehalt des Systems entstehen. Wird nur der rein geschlossene Betrieb durch Komplettabschaltung der zweiten Verdichtungsstufe erreicht, entsteht eine eindeutige physikalische Regelung in Bezug auf Trocknungsgehalt und Energieverbrauch, sowie Energieerhalt des Systems.

Der optimale Betrieb der Druckregelanlage wird somit für den geschlossenen Betriebsmodus durch eine optimal ausgelegte erste Verdichtungsstufe erreicht, die durch den maximalen Auflade-Volumenstrom, der insbesondere durch die Nennweite des Schaltventils und des maximalen Aufladedrucks definiert wird, sowie der abgeschalteten zweiten Verdichtungsstufe an die Leistungsgrenze des mehrstufigen Kompressors oder der oberen Energiegrenze befüllt wird. Ergänzend kann zur Sicherheit auch ein zusätzliches Druckbegrenzungsventil in der Aufladeleitung vorgesehen sein, das einen maximalen Aufladedruck in der Aufladeleitung festlegt, wobei der maximale Aufladedruck in Abhängigkeit der maximalen Energiebegrenzung gewählt werden kann, so dass die erste Verdichtungsstufe nicht über ihrer Leistungsgrenze bzw. der Leistungsgrenze ihres Antriebs betrieben wird. Ergänzend kann auch der Aufbau der ersten Verdichtungsstufe des mehrstufigen Kompressors angepasst werden, indem beispielsweise ein Kolben, der für die Verdichtung in der ersten Verdichtungsstufe sorgt, mit einem größeren Durchmesser ausgelegt wird.

Erfindungsgemäß ist der mehrstufige Kompressor als ein Kolbenkompressor ausgeführt, wobei durch einen ersten Kolben eine erste Verdichtungsstufe ausgebildet wird und durch einen zweiten Kolben die zweite Verdichtungsstufe, die durch das Zwischenvolumen miteinander verbunden sind, wobei auch weitere Verdichtungsstufen mit weiteren Kolben vorhanden sein können. Alle Kolben werden von einem Motor über einen Kolbenantrieb bewegt, um nacheinander das Druckmittel in dem entsprechenden Verdichtungsraum zu verdichten. Die Verdichtungsstufen weisen unterschiedliche Verdichtungsvolumen auf, um durch die erste Verdichtungsstufe eine effiziente Vorverdichtung oder eine effiziente zusätzliche Verdichtung des Aufladedruckmittels und durch die zweite Verdichtungsstufe eine zusätzliche Verdichtung des vorverdichteten Druckmittels und durch ggf. weitere Verdichtungsstufe eine weitere Verdichtung erreichen zu können. Der Kolbenkompressor ist Teil einer Druckregelanlage, die über eine Verdichtung von Luft als Druckmittel mehrere Federn mit Druckluft versorgt, um beispielsweise eine Federung oder ein Heben und Senken eines Teils des Fahrzeuges zu erreichen, wobei dies in einem geschlossenen oder einem geöffneten Betriebsmodus stattfinden kann.

Vorteilhafterweise können das Umleitventil und die dazugehörigen Übertragungsleitungen sowie die Umgehungsleitung zur selbstregulierenden Abstimmung des Kompressors im geschlossenen Betriebsmodus platzsparend in einem Kompressorgehäuse, beispielsweise in einem Kompressordeckel, eingebaut werden. Dadurch können Platz und Gewicht gespart werden und zudem ein einfacher Aufbau mit geringen pneumatischen Übertragungswegen und somit wenigen Druckverlusten erreicht werden. Zudem ist vorteilhafterweise eine einfache Nachrüstbarkeit der zusätzlichen pneumatischen Komponenten in einem üblichen mehrstufigen Kompressor möglich.

Die Erfindung wird im Folgenden anhand der beiliegenden Zeichnungen näher erläutert. Es zeigen:
- Fig. 1a, b, c: eine Luftfederanlage mit einem zweistufigen Kompressor in unterschiedlichen Ausführungsformen;
- Fig. 2: einen zweistufiger Kompressor mit einem integrierten druckgesteuerten Umleitventil; und
- Fig. 3: ein Flussdiagramm zur Durchführung des erfindungsgemäßen Verfahrens.

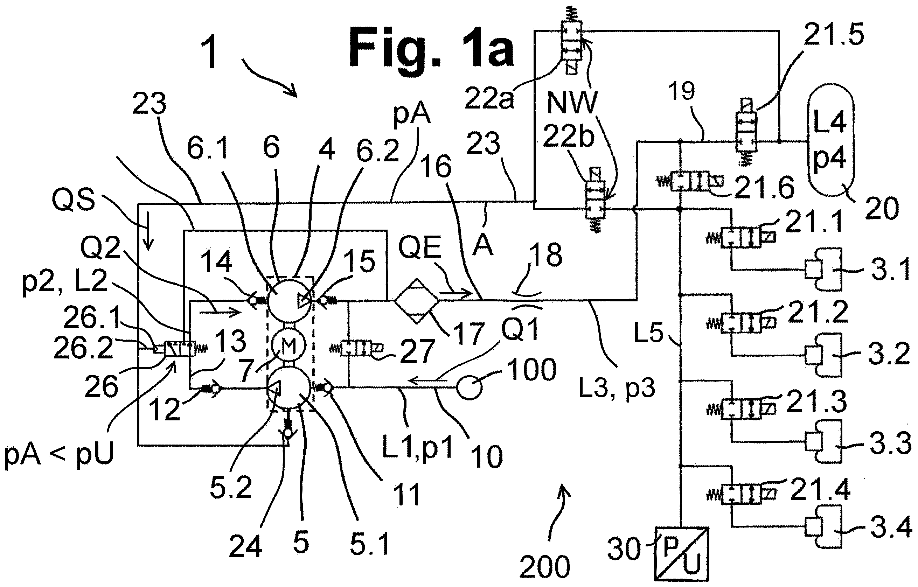

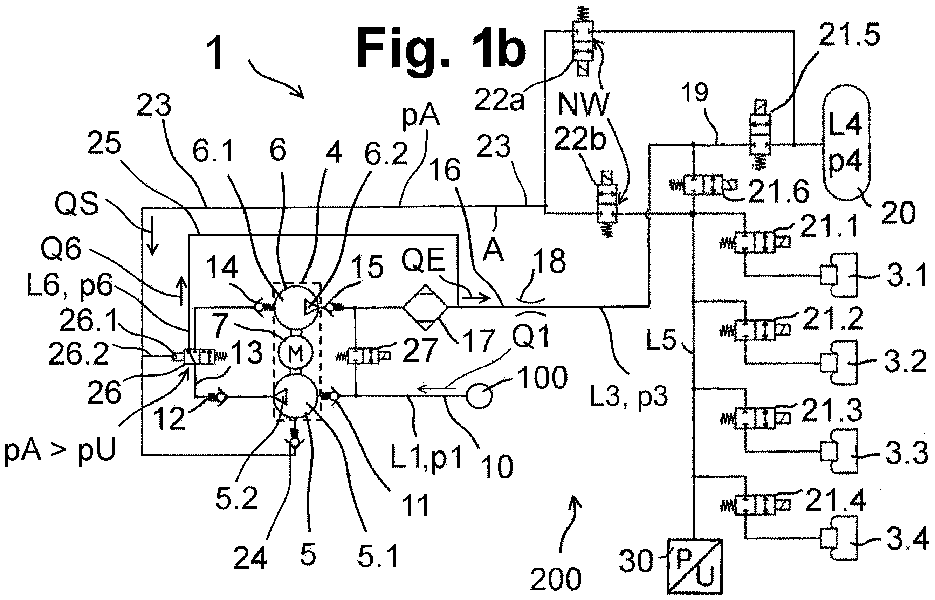

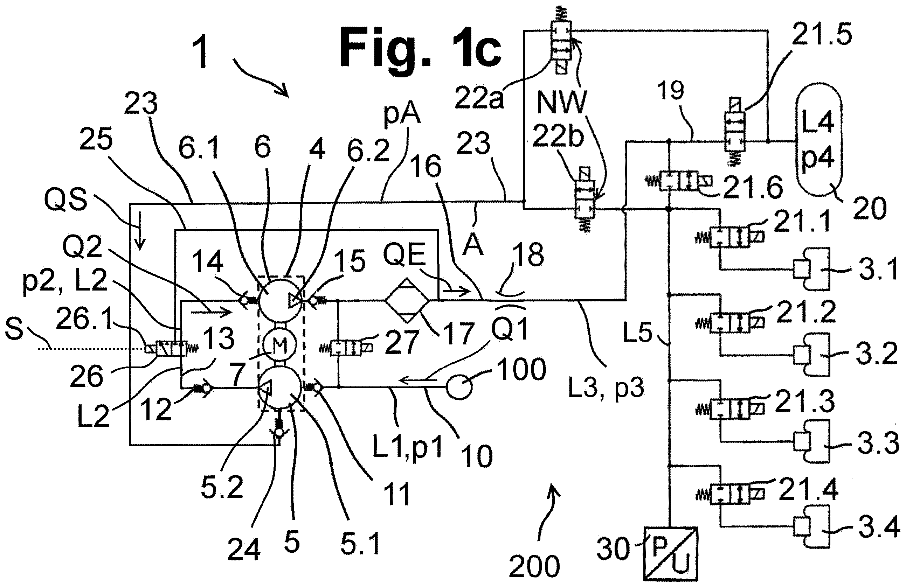

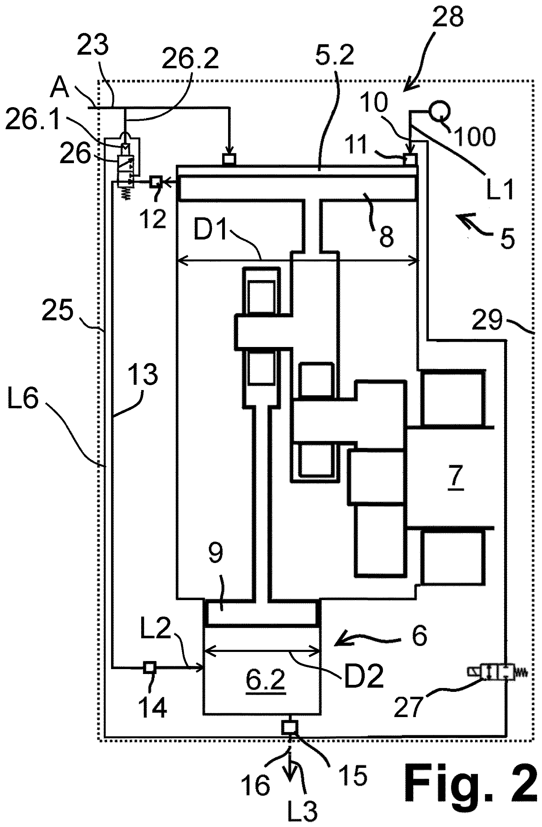

Gemäß Figur 1a, b, c ist jeweils eine Druckregelanlage, beispielsweise eine Luftfederanlage 1 vorgesehen, die vier Druckmittelkammern 3.1, 3.2, 3.3, 3.4 aufweist, die jeweils einem Verbraucher, beispielsweise Luftfedern eines Fahrzeuges 200, zugeordnet sind. Die Druckmittelkammern 3.i werden beispielsweise mit einem verdichteten Druckmittel L3, beispielsweise Luft, versorgt, wobei das verdichtete Druckmittel L3 in einem zweistufigen Kompressor 4, beispielsweise einem in Fig. 2 dargestellten Kolbenkompressor verdichtet wird.

Der zweistufige Kompressor 4 weist dazu eine erste Verdichtungsstufe 5 sowie eine zweite Verdichtungsstufe 6 auf, die jeweils einen Ansaugraum 5.1, 6.1 und einen Verdichtungsraum 5.2, 6.2 aufweisen, wobei das in den jeweiligen Ansaugraum 5.1, 6.1 einströmende Druckmittel L1, L2, A in dem Verdichtungsraum 5.2, 6.2 verdichtet wird. Angetrieben werden die Verdichtungsstufen 5, 6 durch einen Motor 7, der bewirkt, dass sich ein in der jeweiligen Verdichtungsstufe 5, 6 befindlicher Kolben 8, 9 (s. Fig. 2) auf- und ab-bewegt und dadurch das in den Ansaugraum 5.1, 6.1 eingefüllte Druckmittel L1, L2, A entsprechend verdichtet wird.

Die Druckregelanlage 1 kann gemäß dieser Ausführung in zwei Betriebsmodi betrieben werden, einem offenen Betriebsmodus BMo (open mode) und einem geschlossenen Betriebsmodus BMc (closed mode), in denen jeweils Luft als Druckmittel L1, L2, L3, L4, L5, L6, A gefördert und verdichtet wird. Im offenen Betriebsmodus BMo wird Ansaugluft L1 aus der Atmosphäre 100, d. h. mit einem Luftdruck bzw. Ansaugdruck p1 von ca. 1 bar und einem Ansaug-Volumenstrom Q1, über eine Ansaugleitung 10 sowie ein erstes Einlassventil 11, beispielsweise ein Rückschlagventil, in den ersten Ansaugraum 5.1 der ersten Verdichtungsstufe 5 eingeleitet. Anschließend wird die Ansaugluft L1 über den ersten Kolben 8 (s. Fig. 2) zunächst vorverdichtet und dabei in den ersten Verdichtungsraum 5.2 geleitet. Aus dem ersten Verdichtungsraum 5.2 strömt die vorverdichtete Luft L2 mit einem Zwischendruck p2 sowie einem Zwischen-Volumenstrom Q2 über ein erstes Auslassventil 12, beispielsweise ein Rückschlagventil, in ein Zwischenvolumen 13.

Aus dem Zwischenvolumen 13 gelangt die vorverdichtete Luft L2 im offenen Betriebsmodus BMo über ein Umleitventil 26 und über ein zweites Einlassventil 14 in den zweiten Ansaugraum 6.1 der zweiten Verdichtungsstufe 6, aus dem die vorverdichtete Luft L2 über einen zweiten Kolben 9 (s. Fig. 2) weiter verdichtet wird und dabei in den zweiten Verdichtungsraum 6.2 eingeleitet wird. Aus der zweiten Verdichtungsstufe 6 gelangt die verdichtete Luft L3 mit einem Enddruck p3 über ein zweites Auslassventil 15 in eine Auslassleitung 16 zu einem Lufttrockner 17 und einer Düse 18. Anschließend leitet die Auslassleitung 16 die verdichtete Luft L3 mit einem End-Volumenstrom QE zu den Druckmittelkammern 3.1, 3.2, 3.3, 3.4 der angeschlossenen Verbraucher, beispielsweise der Luftfedern, sowie über eine Vorratsleitung 19 zu einem Druckmittelvorrat 20, in dem die verdichtete Luft L3 als gespeicherte Luft L4 mit einem Vorratsdruck p4, der aufgrund von Verlusten etwas geringer ist als der Enddruck p3, gespeichert wird.

Der Druckmittelvorrat 20 sowie die Druckmittelkammern 3.1, 3.2, 3.3, 3.4 sind jeweils durch ein steuerbares Ventil 21.1, 21.2, 21.3, 21.4, 21.5, 21.6, beispielsweise einem 2/2-Magnetventil, mit der Auslassleitung 16 bzw. der Vorratsleitung 19 verbindbar, so dass je nach Stellung der steuerbaren Ventile 21.i die verdichtete Luft L3 in die Druckmittelkammern 3.1, 3.2, 3.3, 3.4 zum Steuern der Verbraucher oder in den Druckmittelvorrat 20 strömen kann.

Demnach wird die verdichtete Luft L3 bei geöffnetem sechsten Ventil 21.6 sowie geöffnetem ersten Ventil 21.1 in die erste Druckmittelkammer 3.1, bei geöffnetem zweiten Ventil 21.2 in die zweite Druckmittelkammer 3.2, bei geöffnetem dritten Ventil 21.3 in die dritte Druckmittelkammer 3.3 und bei geöffnetem vierten Ventil 21.4 in die vierte Druckmittelkammer 3.4 geleitet, wobei dann das fünfte Ventil 21.5 geschlossen ist und somit keine verdichtete Luft L3 in den Druckmittelvorrat 20 strömen kann.

Befinden sich andererseits die Ventile 21.1, 21.2, 21.3, 21.4, 21.6 in der geschlossen Stellung und das fünfte Ventil 21.5 ist geöffnet, kann durch den Lufttrockner 17 getrocknete und verdichtete Luft L3 in den Druckmittelvorrat 20 eingeleitet und darin gespeichert werden. Eine Drucküberwachung kann über ein Druckmessgerät 30 erfolgen.

Über ein zusätzliches Ablassventil 27 kann die verdichtete Luft L3 in die Atmosphäre 100 abgelassen werden.

Die im Druckmittelvorrat 20 gespeicherte Luft L4 kann im geschlossenen Betriebsmodus BMc als Aufladedruckmittel A erneut in den mehrstufigen Kompressor 4 eingelassen werden, so dass die bereits verdichtete gespeicherte Luft L4 ein weiteres Mal verdichtet wird:
Dazu bleibt gemäß dieser Ausführungsform das fünfte Ventil 21.5 geschlossen und ein erstes Schaltventil 22a elektrisch geöffnet, das in einer zwischen dem fünften Ventil 21.5 und dem Druckmittelvorrat 20 abzweigenden Aufladeleitung 23 angeordnet ist. Das zweite Schaltventil 22b ist in diesem Fall geschlossen. Die Aufladeleitung 23 ist über ein drittes Einlassventil 24, beispielsweise ein Rückschlagventil, mit der ersten Verdichtungsstufe 5 verbunden, so dass in der geöffneten Stellung des ersten Schaltventils 22a die gespeicherte Luft L4 in die erste Verdichtungsstufe 5 sowie in den ersten Ansaugraum 5.1 einströmen kann, um von der ersten Verdichtungsstufe 5 erneut verdichtet zu werden. Das dadurch erneut verdichtete Aufladedruckmittel A wird im Folgenden als Verdichtungsdruckmittel L6 (Fig. 1b) bezeichnet, das mit einem Verdichtungsdruck p6 und einen Verdichtungs-Volumenstrom Q6 aus der ersten Verdichtungsstufe 5 zunächst in das Zwischenvolumen 13 gefördert wird.

Ein Einströmen der gespeicherten Luft L4 in die Ansaugleitung 10 wird durch das erste Einlassventil 11 verhindert, das in dieser Richtung schließt. Ebenso wird ein Einströmen der Ansaugluft L1 in die erste Verdichtungsstufe 5 verhindert, da der Druck im ersten Ansaugraum 5.1 der ersten Verdichtungsstufe 5, der in etwa einem Aufladedruck pA des Aufladedruckmittels A bzw. in dem Fall in etwa dem Vorratsdruck p4 entspricht, höher ist als der Ansaugdruck p1. Dadurch wird ein Öffnen des ersten Einlassventils 11 und somit ein Einströmen der Ansaugluft L1 in den ersten Ansaugraum 5.1 verhindert.

Ist im geschlossenen Betriebsmodus BMc eine Rückführung von Kammerluft L5 aus den Druckmittelkammern 3.i in den Druckmittelvorrat 20 gewünscht, so wird das der jeweiligen Druckmittelkammer 3.i zugeordnete Ventil 21.i (mit i=1...4) sowie ein zweites Schaltventil 22b geöffnet und das sechste Ventil 21.6 geschlossen, so dass die Kammerluft L5 als Aufladedruckmittel A in die Aufladeleitung 23 eingelassen wird und darüber erneut in die erste Verdichtungsstufe 5 einströmen kann. Das erste Schaltventil 22a ist in diesem Fall ebenfalls geschlossen und das fünfte Ventil 21.5 geöffnet, um ein Rückführen in den Druckmittelvorrat 20 zu ermöglichen. Ist lediglich eine Verdichtung von gespeicherter Luft L4 in der Druckregelanlage 1 vorgesehen, kann der Pfad über das zweite Schaltventil 22b auch entfallen.

Eine Nennweite NW der Schaltventile 22a, 22b wird hierbei beispielsweise zwischen 0,5mm und 4mm gewählt, so dass ein hoher Auflade-Volumenstrom QA in die erste Verdichtungsstufe 5 eingestellt werden kann.

Da im geschlossenen Betriebsmodus BMc die zweite Verdichtungsstufe 6 nicht zwingend benötigt wird zum weiteren Verdichten des Aufladedruckmittels A, da bereits durch die erste Verdichtungsstufe 5 eine ausreichende Verdichtung erreicht wird, wird erfindungsgemäß die Verdichtungsleistung der zweiten Verdichtungsstufe 6 reduziert bzw. die zweite Verdichtungsstufe 6 pneumatisch ganz abgeschaltet. Darunter ist zu verstehen, dass von der zweiten Verdichtungsstufe 6 im geschlossenen Betriebsmodus keine Druckmittel mehr verdichtet wird und somit von der zweiten Verdichtungsstufe 6 keine Luft in die Auslassleitung 16 gefördert wird. D.h. es wird eine Druckbegrenzung und/oder eine Volumenstrombegrenzung des aus der zweiten Verdichtungsstufe 6 ausgehenden Druckmittels auf nahezu null erreicht.

Um dies zu ermöglichen, ist das Umleitventil 26 als 3/2 Wegeventil ausgeführt. An einem der Ausgänge des Umleitventils 26 ist eine Umgehungsleitung 25 angeordnet, die in die Auslassleitung 16 mündet. Dadurch kann die zweite Verdichtungsstufe 6 bei entsprechender Stellung des Umleitventils 26 durch die Umgehungsleitung 25 überbrückt werden. Der andere Ausgang des Umleitventils 26 ist mit der zweiten Verdichtungsstufe 6 verbunden. Somit kann je nach Schaltstellung des Umleitventils 26 entweder das im offenen Betriebsmodus BMo von der ersten Verdichtungsstufe 5 in das Zwischenvolumen 13 geförderte vorverdichtete Druckmittel L2 in die zweite Verdichtungsstufe 6 oder das im geschlossenen Betriebsmodus BMc von der ersten Verdichtungsstufe 5 in das Zwischenvolumen 13 geförderte Verdichtungsdruckmittel L6 in die Umgehungsleitung 25 geleitet werden.

Zum Umschalten des Umleitventils 26 weist dieses gemäß der Ausführungsform in den Fig. 1a und 1b einen pneumatischen Steuereingang 26.1a auf, der mit einer pneumatischen Steuerleitung 26.2a verbunden ist, wobei die pneumatische Steuerleitung 26.2a gemäß dieser Ausführung von der Aufladeleitung 23 abzweigt, so dass das Aufladedruckmittel A automatisch auch in die pneumatische Steuerleitung 26.2a eingelassen wird und somit am Steuereingang 26.1a der Aufladedruck pA des Aufladedruckmittels A herrscht. Übersteigt der Aufladedruck pA einen Umschaltdruck pU von beispielsweise 4 bar, der üblicherweise durch das Aufladedruckmittel A überschritten wird, wird das Umleitventil 26 umgeschaltet, wie es in Fig. 1b dargestellt ist. Da in Fig. 1a die Druckregelanlage 1 im offenen Betriebsmodus BMo betrieben wird, ist der in der Steuerleitung 26.2a herrschende Druck geringer als der Umschaltdruck pU, so dass das Umschaltventil 26 in seiner Ursprungsstellung verbleibt bzw. in die Ursprungsstellung zurückfällt sobald vom geschlossenen Betriebsmodus BMc in den geöffneten Betriebsmodus BMo umgeschaltet wird.

Sobald also das jeweilige Schaltventil 22a, 22b geöffnet wird, um den geschlossenen Betriebsmodus BMc zu aktivieren und die Luftfederanlage 1 mit der gespeicherten Luft L4 zu betreiben oder die Kammerluft L5 rückzufördern, wird automatisch über das Umleitventil 26 die Verdichtungsleistung der zweiten Verdichtungsstufe 6 auf null reduziert. Dazu schaltet der am pneumatischen Steuereingang 26.1a anliegende Aufladedruck pA das Umleitventil 26 derartig um, dass das in der ersten Verdichtungsstufe 5 verdichtete Verdichtungsdruckmittel L6 in die Umgehungsleitung 25 gefördert wird. Diese Stellung des Umleitventils 26 ist in Fig. 1b beispielhaft für einen geschlossenen Betriebsmodus BMc gezeigt, bei dem die gespeicherte Luft L4 erneut verdichtet wird, da das erste Schaltventil 22a geöffnet ist. Eine Verdichtung findet somit ausschließlich über die erste Verdichtungsstufe 5 statt, um die Druckmittelkammern 3.i mit Luft zu versorgen.

Somit kann im geschlossenen Betriebsmodus BMc eine Leistungsbegrenzung erreicht werden, mit der der Energiebedarf des Kompressors 4 angepasst werden kann, da von der zweiten Verdichtungsstufe 6 keine Verdichtung mehr geleistet wird. Die benötigte Leistungsaufnahme des Motors 7 des Kompressors 4 wird somit begrenzt, da der zweite Kolben 9 weniger bzw. keine Verdichtungsarbeit mehr zu verrichten hat. Dies kann zur Optimierung der ersten Verdichtungsstufe 5 genutzt werden, so dass eine optimale Abstimmung insbesondere eines End-Volumenstroms QE, einer oberen Energiebegrenzung oE des Kompressors 4 sowie eines ersten Kolbendurchmessers D1 der ersten Verdichtungsstufe 6 erfolgen kann. Der erste Kolbendurchmesser D1 ist hierbei größer als ein zweiter Kolbendurchmesser D2 der zweiten Verdichtungsstufe 6.

Im in Fig. 1a gezeigten Ausführungsbeispiel führt die Umgehungsleitung 25 vor dem Lufttrockner 17 in die Auslassleitung 16 und im in der in Fig. 1b gezeigten Ausführungsbeispiel mündet die Umgehungsleitung 25 nach dem Lufttrockner 17 in die Auslassleitung 10. Somit kann je nach Bedarf das Verdichtungsdruckmittel L6 im geschlossenen Betriebsmodus BMc ein weiteres Mal getrocknet werden. Dies kann beispielsweise dann erforderlich sein, wenn nicht sichergestellt werden kann, das beispielsweise doch ein geringer Anteil an Ansaugluft L1 im geschlossenen Betriebsmodus BMc in die erste Verdichtungsstufe gelangt und sich somit ein Trocknungsgrad des Aufladedruckmittels A verschlechtert.

Gemäß Fig. 1c ist im Unterschied zu den Figuren 1a und 1b eine elektrische Ansteuerung des Umleitventils 26 vorgesehen. Dazu ist der Steuereingang 26.1b elektrisch ausgeführt und die Steuerleitung 26.2b ist ebenfalls eine elektrische Leitung, über die ein Steuersignal S übertragen wird. Das Steuersignal S kann hierbei dasselbe Signal sein, dass an die Schaltventile 22a, 22b ausgegeben wird, um diese beim Umschalten in den geschlossenen Betriebsmodus BMc elektrisch gesteuert zu öffnen. Somit kann ohne Zeitverluste das Aufladedruckmittel A freigegeben werden und gleichzeitig die zweite Verdichtungsstufe 6 abgeschaltet werden.

Gemäß Fig. 2 ist der mehrstufige Kolbenkompressor 4 mit der ersten und der zweiten Verdichtungsstufe 5, 6 in einer schematischen Ansicht dargestellt, die der in den Fig. 1a dargestellten Ausführungsform entspricht. Die beiden Verdichtungsstufen 5, 6 sind über das Zwischenvolumen 13 miteinander verbunden, so dass die in der ersten Verdichtungsstufe 5 durch den ersten Kolben 8 vorverdichtete Luft L2 im offenen Betriebsmodus BMo in die zweite Verdichtungsstufe 6 gefördert werden kann, um dort vom zweiten Kolben 9 weiter verdichtet zu werden.

Im geschlossenen Betriebsmodus BMc wird über die Aufladeleitung 23 das Aufladedruckmittel A in die erste Verdichtungsstufe 5 sowie über die pneumatische Steuerleitung 26.2a an den pneumatischen Steuereingang 26.1a des Umleitventils 26 geleitet. Bei entsprechender Schaltstellung des Umschaltventils 26 wird das aus der ersten Verdichtungsstufe 5 geförderte Verdichtungsdruckmittel L6 über die Umgehungsleitung 25 in die Auslassleitung 13 gefördert. Das pneumatische Umleitventil 26, die zugehörigen Übertragungsleitungen 23, 26.2a sowie die Umgehungsleitung 25 können platzsparend beispielsweise im Kompressordeckel 28 des Kompressorgehäuses 29 angeordnet werden. Die Einlassventile 10, 12, 14, 15, die jeweils als Rückschlagventile ausgeführt sind, verhindern dass das jeweils verdichtete Druckmittel L2, L6 zurückgefördert wird.

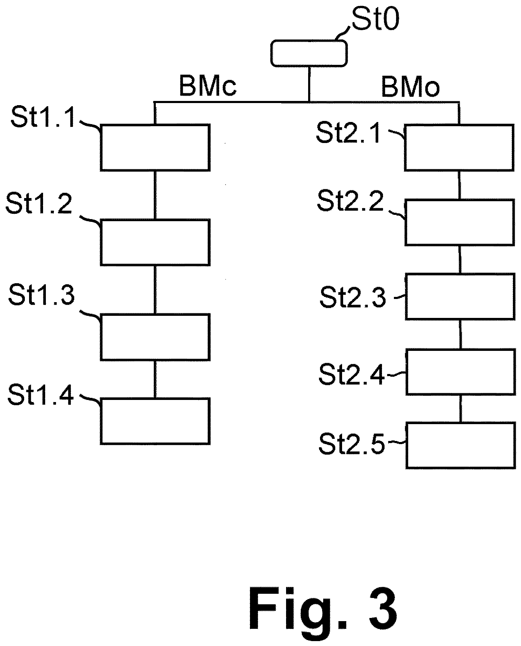

Gemäß Fig. 3 kann das erfindungsgemäße Verfahren zum Betreiben der Luftfederanlage 1 wie folgt durchgeführt werden:
In einem anfänglichen Schritt St0 wird überprüft, welcher Betriebsmodus BMo, BMc der Druckregelanlage eingestellt ist.

Ist der geschlossenen Betriebsmodus BMc der Druckregelanlage 1 eingestellt, wird das Aufladedruckmittel A in einem ersten Schritt St1.1 über das jeweilige Schaltventil 22a, 22b freigegeben und über die Aufladeleitung 23 in die erste Verdichtungsstufe 5 eingelassen, erneut verdichtet und als Verdichtungsdruckmittel L6 in das Zwischenvolumen 13 gefördert.

Gleichzeitig gelangt das Aufladedruckmittel A in einem zweiten Schritt St1.2 über die pneumatische Steuerleitung 26.2a an den pneumatischen Steuereingang 26.1a des als 3/2-Wegeventil ausgeführten Umleitventils 26 oder es wird ein elektrisches Steuersignal S an den in dem Fall elektrischen Steuereingang 26.1b des als 3/2-Wegeventil ausgeführten Umleitventils 26 ausgegeben. Anschließend wird das Umleitventil 26 in einem dritten Schritt St1.3 durch den anliegenden Aufladedruck pA oder durch das Steuersignal S umgeschaltet, wobei dies in beiden Fällen immer dann erfolgt, wenn sich die Druckregelanlage 1 im geschlossenen Betriebsmodus BMc befindet.

In dieser umgeschalteten Stellung des Umleitventils 26 wird in einem vierten Schritt St1.4 das von der ersten Verdichtungsstufe 5 verdichtete Verdichtungsdruckmittel L6 über die Umgehungsleitung 25 in die Auslassleitung 16 gefördert, so dass die zweite Verdichtungsstufe 6 umgangen bzw. überbrückt wird; die erste Verdichtungsstufe 5 ist somit über das Zwischenvolumen 13 nicht mehr mit der zweiten Verdichtungsstufe 6 verbunden. Somit wird die Verdichtungsleistung der zweiten Verdichtungsstufe 6 auf ein Minimum reduziert, da die Leistungsaufnahme der zweiten Verdichtungsstufe 6 auf Reibungsverluste begrenzt wird. Dieser Energiegewinn kann zur optimalen Abstimmung der ersten Verdichtungsstufe 5 verwendet werden, so dass eine optimale Abstimmung insbesondere des End-Volumenstroms QE, der oberen Energiebegrenzung oE des Kompressors 4 sowie des ersten Kolbendurchmessers D1 der ersten Verdichtungsstufe 6 erfolgen kann. Das Verdichtungsdruckmittel L6 wird dann den Verbrauchern 3.i oder dem Druckmittelvorrat 20 zur Verfügung gestellt.

Im offenen Betriebsmodus BMo gelangt die Ansaugluft L1 aus der Atmosphäre 100 in einem Schritt St2.1 in die erste Verdichtungsstufe 5. In der ersten Verdichtungsstufe 5 wird die Ansaugluft L1 in einem zweiten Schritt St2.2 auf den Zwischendruck p2 vorverdichtet und in einem dritten Schritt St2.3 in das Zwischenvolumen 13 eingelassen. Da aufgrund der geschlossenen Schaltventile 22a, 22b am Umleitventil 26 kein Aufladedruckmittel A vorhanden ist oder kein entsprechendes Steuersignal S zum Umschalten anliegt, befindet sich das Umleitventil 26 in seiner Ursprungsstellung, in der die erste Verdichtungsstufe 5 über das Zwischenvolumen 13 mit der zweiten Verdichtungsstufe 6 verbunden ist, so dass das vorverdichtete Druckmittel L2 aus dem Zwischenvolumen 13 in die zweite Verdichtungsstufe 6 einströmen kann. In dieser findet in einem vierten Schritt St2.4 eine weitere Verdichtung des vorverdichteten Druckmittels L2 auf den Enddruck p3 statt. In einem abschließenden Schritt St2.5 gelangt das verdichtete Druckmittel L3 in die Druckmittelkammern 3.i oder den Druckmittelvorrat 20.

### Bezugszeichenliste (Teil der Beschreibung)

- 1: Luftfederanlage
- 3.i: Druckmittelkammern
- 4: zweistufiger Kompressor
- 5: erste Verdichtungsstufe
- 5.1: erster Ansaugraum
- 5.2: erster Verdichtungsraum
- 6: zweite Verdichtungsstufe
- 6.1: zweiter Ansaugraum
- 6.2: zweiter Verdichtungsraum
- 7: Motor
- 8: erster Kolben der ersten Verdichtungsstufe
- 9: zweiter Kolben der zweiten Verdichtungsstufe
- 10: Ansaugleitung
- 11: erstes Einlassventil
- 12: erstes Auslassventil
- 13: Zwischenvolumen
- 14: zweites Einlassventil
- 15: zweites Auslassventil
- 16: Auslassleitung
- 17: Lufttrockner
- 18: Düse
- 19: Vorratsleitung
- 20: Druckmittelvorrat
- 21.i: steuerbare Ventile
- 22a: erstes Schaltventil
- 22b: zweites Schaltventil
- 23: Aufladeleitung
- 24: drittes Einlassventil
- 25: Umgehungsleitung
- 26: Umleitventil (3/2 Wegeventil)
- 26.1a, b: Steuereingang (pneumatisch, elektrisch)
- 26.2a, b: Steuerleitung (pneumatisch, elektrisch)
- 27: Ablassventil
- 28: Kompressordeckel
- 29: Kompressorgehäuse
- 30: Druckmessgerät
- 100: Atmosphäre
- 200: Fahrzeug

- A: Aufladedruckmittel
- BMo: offener Betriebsmodus
- BMc: geschlossener Betriebsmodus
- D1: erster Kolbendurchmesser
- D2: zweiter Kolbendurchmesser
- L1: Ansaugluft
- L2: vorverdichtete Luft
- L3: verdichtete Luft
- L4: gespeicherte Luft
- L5: Kammerluft
- L6: Verdichtungsdruckmittel
- oE: obere Energiebegrenzung
- NW: Nennweite
- pA: Aufladedruck
- p1: Luftdruck/Ansaugdruck
- p2: Zwischendruck
- p3: Enddruck
- p4: Vorratsdruck
- p6: Verdichtungsdruck
- pU: Umschaltdruck
- Q1: Ansaug-Volumenstrom
- Q2: Zwischen-Volumenstrom
- Q6: Verdichtungs-Volumenstrom
- QE: End-Volumenstrom
- QA: Auflade-Volumenstrom
- S: Steuersignal
- St1.1, St1.2, St1.3, St1.4: Schritte des Verfahrens im BMc
- St2.1, St2.2 ,St2.3, St2.4, St2.5: Schritte des Verfahrens im BMo

## Patentansprüche

1. Verfahren zum Betreiben einer Druckregelanlage (1), insbesondere für Fahrzeuge (200), mit einem mehrstufigen Kompressor (4),
wobei von dem mehrstufigen Kompressor (4) ein mehrfach verdichtetes Druckmittel (L3, L6) zum Befüllen eines Druckmittelvorrats (20) oder von Druckmittelkammern (3.i; i=1,...4) der Druckregelanlage (1) ausgegeben wird (St1.4, St2.5),
wobei dazu von einer ersten Verdichtungsstufe (5) des mehrstufigen Kompressors (4)
- ein vorverdichtetes Druckmittel (L2) bereitgestellt wird (St2.3), das zumindest in einer weiteren, zweiten Verdichtungsstufe (6) zu einem verdichteten Druckmittel (L3) verdichtet (St2.4) und vom mehrstufigen Kompressor (4) ausgegeben (St2.5) wird, oder
- ein Verdichtungsdruckmittel (L6) bereitgestellt wird (St1.1), das durch eine zusätzliche Verdichtung eines bereits verdichteten Aufladedruckmittels (A) aus dem Druckmittelvorrat (20) oder den Druckmittelkammern (3.i; i=1,...4) der Druckregelanlage (1) gewonnen wird, wobei das Verdichtungsdruckmittel (L6) ohne eine zusätzliche Verdichtung durch die zweite Verdichtungsstufe (6) vom mehrstufigen Kompressor (4) ausgegeben wird zum Anpassen der Verdichtungsleistung der zweiten Verdichtungsstufe (6), wenn zumindest die erste Verdichtungsstufe (5) das Aufladedruckmittel (A) zusätzlich verdichtet.

2. Verfahren nach Anspruch 1, **dadurch gekennzeichnet, dass** das Verdichtungsdruckmittel (L6) in einer die zweite Verdichtungsstufe (6) überbrückenden Umgehungsleitung (25) um die zweite Verdichtungsstufe (6) herumgeleitet wird zum Verhindern einer weiteren Verdichtung des Verdichtungsdruckmittels (L6) durch die zweite Verdichtungsstufe (6).

3. Verfahren nach Anspruch 2, **dadurch gekennzeichnet, dass** die Umgehungsleitung (25) in eine Auslassleitung (16) mündet und das Verdichtungsdruckmittel (L6) über die Auslassleitung (16) ohne oder mit einer weiteren Trocknung in einem Lufttrockner (17) an den Druckmittelvorrat (20) oder die Druckmittelkammern (3.i; i=1,...4) der Druckregelanlage (1) ausgegeben wird.

4. Verfahren nach einem der vorhergehenden Ansprüche, **dadurch gekennzeichnet, dass** in Abhängigkeit einer Schaltstellung eines Umleitventils (26) entweder das vorverdichtete Druckmittel (L2) von der ersten Verdichtungsstufe (5) über ein Zwischenvolumen (13) zur zweiten Verdichtungsstufe (6) gefördert wird oder das Verdichtungsdruckmittel (L6) von der ersten Verdichtungsstufe (5) über das Zwischenvolumen (13) um die zweite Verdichtungsstufe (6) herumgeleitet wird.

5. Verfahren nach Anspruch 4, **dadurch gekennzeichnet, dass** die Schaltstellung des Umleitventils (26) elektrisch in Abhängigkeit eines Steuersignals (S) oder pneumatisch in Abhängigkeit eines Aufladedruckes (pA) des Aufladedruckmittels (A) vorgegeben wird, wobei über das Steuersignal (S) oder den Aufladedruck (pA) vorgegeben wird, ob die erste Verdichtungsstufe (5) ein vorverdichtetes Druckmittel (L2) oder ein Verdichtungsdruckmittel (L6) bereitstellt.

6. Verfahren nach Anspruch 5, **dadurch gekennzeichnet, dass** sobald ein Öffnen eines Schaltventils (22a, 22b) und somit eine Freigabe des Aufladedruckmittels (A) in die erste Verdichtungsstufe (5) erfolgt
- ein Steuersignal (S) ausgegeben wird, das das Umleitventil (26) elektrisch umschaltet, oder
- das Aufladedruckmittel (A) das Umleitventil (26) pneumatisch umschaltet,
wobei in der umgeschalteten Stellung des Umleitventils (26) das Verdichtungsdruckmittel (L6) über das Zwischenvolumen (13) um die zweite Verdichtungsstufe (6) herumgeleitet wird.

7. Verfahren nach Anspruch 5 oder 6, **dadurch gekennzeichnet, dass** bei einem geschlossenen Schaltventil (22a, 22b) und somit einer Verdichtung von Ansaugluft (L1) durch die erste Verdichtungsstufe (6) das Umleitventil (26) eine Ursprungsstellung einnimmt, in der die erste Verdichtungsstufe (5) über das Zwischenvolumen (13) mit der zweiten Verdichtungsstufe (6) verbunden ist.

8. Verfahren nach einem der vorhergehenden Ansprüche, **dadurch gekennzeichnet, dass** ein Einströmen von Ansaugluft (L1) in die erste Verdichtungsstufe (5) verhindert wird, wenn zur zusätzlichen Verdichtung das Aufladedruckmittel (A) in die erste Verdichtungsstufe (5) eingelassen und von der ersten Verdichtungsstufe (5) ein Verdichtungsdruckmittel (L6) bereitgestellt wird.

9. Druckregelanlage (1), insbesondere für ein Fahrzeug (200), mindestens aufweisend:
einen mehrstufigen Kompressor (4) mit zumindest einer ersten Verdichtungsstufe (5) zum Bereitstellen eines vorverdichteten Druckmittels (L2) oder eines Verdichtungsdruckmittels (L6) und einer zweiten Verdichtungsstufe (6) zum Bereitstellen eines verdichteten Druckmittels (L3), wobei die erste Verdichtungsstufe (5) und die zweite Verdichtungsstufe (6) über ein Zwischenvolumen (13) miteinander verbunden sind, mindestens eine mit der zweiten Verdichtungsstufe (6) verbundene Druckmittelkammer (3.i; i=1...4),
einen mit der zweiten Verdichtungsstufe (6) verbundenen Druckmittelvorrat (20) zum Speichern des verdichteten Druckmittels (L3) oder des Verdichtungsdruckmittels (L6), wobei das Verdichtungsdruckmittel (L6) durch eine zusätzliche von der ersten Verdichtungsstufe (5) bewirkten Verdichtung des bereits verdichteten gespeicherten Druckmittels (L4) oder des bereits verdichteten Kammerdruckmittels (L5) hervorgeht, wobei in dem Zwischenvolumen (13) ein elektrisch oder pneumatisch steuerbares Umleitventil (26) angeordnet ist, wobei das Umleitventil (26) bewirkt, dass bei einem Bereitstellen des vorverdichteten Druckmittels (L2) durch die erste Verdichtungsstufe (5) die erste Verdichtungsstufe (5) mit der zweiten Verdichtungsstufe (6) verbindbar ist zum Einleiten des vorverdichteten Druckmittels (L2) in die zweite Verdichtungsstufe (6),
**dadurch gekennzeichnet, dass**
eine Aufladeleitung (23), die den Druckmittelvorrat (20) oder die mindestens eine Druckmittelkammer (3.i) mit der ersten Verdichtungsstufe (5) verbindet, zum Betreiben der Druckregelanlage (1) mit in dem Druckmittelvorrat (20) gespeichertem Druckmittel (L4) oder zum Rückführen eines in den Druckmittelkammern (3.i) genutzten Kammerdruckmittels (L5) in den Druckmittelvorrat (20), und wobei das Umleitventil (26) bewirkt, dass
bei einem Bereitstellen des Verdichtungsdruckmittels (L6) durch die erste Verdichtungsstufe (5) die erste Verdichtungsstufe (5) mit einer die zweite Verdichtungsstufe (6) überbrückenden Umgehungsleitung (25) verbindbar ist zum Umgehen und pneumatischen Abschalten der zweiten Verdichtungsstufe (6).

10. Druckregelanlage (1) nach Anspruch 9, **dadurch gekennzeichnet, dass** das Umleitventil (26) ein 3/2-Wegeventil ist.

11. Druckregelanlage (1) nach Anspruch 9 oder 10, **dadurch gekennzeichnet, dass** dem Umleitventil (26) über einen elektrischen Steuereingang (26.1b) ein elektrisches Steuersignal (S) oder über einen pneumatischen Steuereingang (26.1a) ein pneumatischer Aufladedruck (pA) zuleitbar ist, wobei über das elektrische Steuersignal (S) oder den pneumatischen Aufladedruck (pA) vorgebbar ist, ob die erste Verdichtungsstufe (5) ein vorverdichtetes Druckmittel (L2) oder ein Verdichtungsdruckmittel (L6) ausgibt.

12. Druckregelanlage (1) nach einem der Ansprüche 9 bis 11, **dadurch gekennzeichnet, dass** die erste Verdichtungsstufe (5) ein erstes Einlassventil (11) aufweist, durch das Ansaugluft (L1) in die erste Verdichtungsstufe (5) einleitbar ist, wobei das erste Einlassventil (11) derartig ausgebildet ist, dass ein Einleiten von Ansaugluft (L1) in die erste Verdichtungsstufe (5) verhindert wird, falls das Aufladedruckmittel (A) in die erste Verdichtungsstufe (6) eingelassen wird.

13. Druckregelanlage (1) nach einem der Ansprüche 9 bis 12, **dadurch gekennzeichnet, dass** die Druckregelanlage (1) weiterhin einen Lufttrockner (17) aufweist, wobei der Lufttrockner (17) in Strömungsrichtung nach dem mehrstufigen Kompressor (4) angeordnet ist zum Trocknen des verdichteten Druckmittels (L3) und die Umgehungsleitung (25) vor dem Lufttrockner (17) in eine Auslassleitung (16) mündet zum zusätzlichen Trocknen des Verdichtungsdruckmittels (L6) oder nach dem Lufttrockner (17) in die Auslassleitung (16) mündet.

14. Druckregelanlage (1) nach einem der Ansprüche 9 bis 13, **dadurch gekennzeichnet, dass** ein erster Durchmesser (D1) der ersten Verdichtungsstufe (5) größer ist als ein zweiter Durchmesser (D2) der zweiten Verdichtungsstufe (6).

15. Druckregelanlage (1) nach einem der Ansprüche 9 bis 14, **dadurch gekennzeichnet, dass** das Umleitventil (26) sowie die Umgehungsleitung (25) in einem Kompressorgehäuse (29), beispielsweise einem Kompressordeckel (28), des mehrstufigen Kompressors (4) integriert sind.

16. Druckregelanlage (1) nach einem der Ansprüche 9 bis 15, **dadurch gekennzeichnet, dass** die Druckregelanlage (1) eine Luftfederanlage (1) in einem Fahrzeug (200), insbesondere einem Personenkraftwagen (200), ist.

17. Fahrzeug (200), insbesondere Personenkraftwagen (200), mit einer Druckregelanlage (1) nach einem der Ansprüche 9 bis 16 zur Durchführung des Verfahrens nach einem der Ansprüche 1 bis 8.

## Claims

1. Method for operating a pressure control system (1), in particular for vehicles (200), having a multistage compressor (4),
wherein a pressure medium (L3, L6) compressed multiple times is output (St1.4, St2.5) by the multistage compressor (4) in order to fill a pressure medium reservoir (20) or pressure medium chambers (3.i; i=1,...4) of the pressure control system (1),
wherein to do so, by a first compression stage (5) of the multi-stage compressor (4),
- a precompressed pressure medium (L2) is provided (St2.3) which is compressed (St2.4) at least in a further, second compression stage (6) to form a compressed pressure medium (L3) and is output (St2.5) by the multi-stage compressor (4), or
- a compression pressure medium (L6) is provided (St1.1), which is obtained from an additional compression of an already compressed charge pressure medium (A) from the pressure medium reservoir (20) or the pressure medium chambers (3.i; i=1,...4) of the pressure control system (1), wherein the compression pressure medium (L6) is output without additional compression by the second compression stage (6) of the multistage compressor (4) in order to adapt the compression power of the second compression stage (6) when at least the first compression stage (5) additionally compresses the charge pressure medium (A).

2. Method according to Claim 1, **characterized in that** the compression pressure medium (L6) is diverted around the second compression stage (6) in a bypass line (25) bridging the second compression stage (6) in order to prevent further compression of the compression pressure medium (L6) by the second compression stage (6).

3. Method according to Claim 2, **characterized in that** the bypass line (25) opens into an outlet line (16), and the compression pressure medium (L6) is output via the outlet line (16) without or with further drying in an air dryer (17) to the pressure medium reservoir (20) or the pressure medium chambers (3i; i=1...4) of the pressure control system (1).

4. Method according to any of the preceding claims, **characterized in that** depending on a switch position of a diversion valve (26), either the precompressed pressure medium (L2) from the first compression stage (5) is conveyed via an intermediate volume (13) to the second compression stage (6), or the compression pressure medium (L6) from the first compression stage (5) is diverted around the second compression stage (6) via the intermediate volume (13).

5. Method according to Claim 4, **characterized in that** the switch position of the diversion valve (26) is preset electrically depending on a control signal (S) or pneumatically depending on a charge pressure (pA) of the charge pressure medium (A), wherein the control signal (S) or the charge pressure (pA) predetermines whether the first compression stage (5) provides a precompressed pressure medium (L2) or a compression pressure medium (L6) .

6. Method according to Claim 5, **characterized in that** as soon as a changeover valve (22a, 22b) opens and hence the charge pressure medium (A) is released into the first compression stage (5),
- a control signal (S) is output which electrically switches the diversion valve (26), or
- the charge pressure medium (A) pneumatically switches the diversion valve (26),
wherein in the switched position of the diversion valve (26), the compression pressure medium (L6) is diverted around the second compression stage (6) via the intermediate volume (13).

7. Method according to Claim 5 or 6, **characterized in that** when a changeover valve (22a, 22b) is closed and hence intake air (L1) is compressed by the first compression stage (6), the diversion valve (26) assumes an original position in which the first compression stage (5) is connected to the second compression stage (6) via the intermediate volume (13).

8. Method according to any of the preceding claims, **characterized in that** an inflow of intake air (L1) into the first compression stage (5) is prevented if, for additional compression, the charge pressure medium (A) is introduced into the first compression stage (5) and the first compression stage (5) provides a compression pressure medium (L6).

9. Pressure control system (1), in particular for a vehicle (200), comprising at least:
a multistage compressor (4) with at least one first compression stage (5) for providing a precompressed pressure medium (L2) or a compression pressure medium (L6), and a second compression stage (6) for providing a compressed pressure medium (L3), wherein the first compression stage (5) and the second compression stage (6) are connected together via an intermediate volume (13),
at least one pressure medium chamber (3i; i=1...4) connected to the second compression stage (6),
a pressure medium reservoir (20) connected to the second compression stage (6) for storing the compressed pressure medium (L3) or the compression pressure medium (L6),
wherein the compression pressure medium (L6) originates from an additional compression, achieved by the first compression stage (5), of the already compressed stored pressure medium (L4) or the already compressed chamber pressure medium (L5),
wherein an electrically or pneumatically controllable diversion valve (26) is arranged in the intermediate volume (13), wherein the diversion valve (26) ensures that
on provision of the precompressed pressure medium (L2) by the first compression stage (5), the first compression stage (5) can be connected to the second compression stage (6) for introduction of the precompressed pressure medium (L2) into the second compression stage (6),
**characterized in that**
a charge line (23) which connects the pressure medium reservoir (20) or the at least one pressure medium chamber (3.i) to the first compression stage (5) for operation of the pressure control system (1) with pressure medium (L4) stored in the pressure medium reservoir (20) or for return of a chamber pressure medium (L5) used in the pressure medium chambers (3.i) to the pressure medium reservoir (20), and wherein the diversion valve (26) ensures that
on provision of the compression pressure medium (L6) by the first compression stage (5), the first compression stage (5) can be connected to a bypass line (25) bridging the second compression stage (6) in order to bypass and pneumatically disable the second compression stage (6).

10. Pressure control system (1) according to Claim 9, **characterized in that** the diversion valve (26) is a 3/2-way directional control check valve.

11. Pressure control system (1) according to Claim 9 or 10, **characterized in that** an electrical control signal (S) can be sent to the diversion valve (26) via an electrical control input (26.1b), or a pneumatic charge pressure (pA) can be supplied to the diversion valve (26) via a pneumatic control input (26.1a), wherein the electrical control signal (S) or the pneumatic charge pressure (pA) can predetermine whether the first compression stage (5) outputs a precompressed pressure medium (L2) or a compression pressure medium (L6).

12. Pressure control system (1) according to any of Claims 9 to 11, **characterized in that** the first compression stage (5) has a first inlet valve (11) through which intake air (L1) can be introduced into the first compression stage (5), wherein the first inlet valve (11) is configured such that the introduction of intake air (L1) into the first compression stage (5) is prevented if the charge pressure medium (A) is introduced into the first compression stage (6).

13. Pressure control system (1) according to any of Claims 9 to 12, **characterized in that** the pressure control system (1) furthermore comprises an air dryer (17), wherein the air dryer (17) is arranged after the multistage compressor (4) in the flow direction for drying the compressed pressure medium (L3), and the bypass line (25) opens into an outlet line (16) upstream of the air dryer (17) for additional drying of the compression pressure medium (L6), or opens into the outlet line (16) downstream of the air dryer (17).

14. Pressure control system (1) according to any of Claims 9 to 13, **characterized in that** a first diameter (D1) of the first compression stage (5) is greater than the second diameter (D2) of the second compression stage (6) .

15. Pressure control system (1) according to any of Claims 9 to 14, **characterized in that** the diversion valve (26) and the bypass line (25) are integrated in a compressor housing (29), for example a compressor cover (28), of the multistage compressor (4).

16. Pressure control system (1) according to any of Claims 9 to 15, **characterized in that** the pressure control system (1) is a pneumatic suspension system (1) in a vehicle (200), in particular a car (200).

17. Vehicle (200), in particular car (200), with a pressure control system (1) according to any of Claims 9 to 16 for performance of the method according to any of Claims 1 to 8.

## Revendications

1. Procédé permettant de faire fonctionner une installation de régulation de pression (1), en particulier pour véhicules (200), comprenant un compresseur multi-étagé (4),
dans lequel un fluide sous pression (L3, L6) comprimé plusieurs fois est fourni par le compresseur multi-étagé (4) pour le remplissage d'un réservoir de fluide sous pression (20) ou de chambres de fluide sous pression (3.i ; i=l,...4) de l'installation de régulation de pression (1) (St1.4, St2.5),
dans lequel à cet effet un premier étage de compression (5) du compresseur multi-étagé (4)
- fournit un fluide sous pression pré-comprimé (L2) (St2.3), qui est comprimé au moins dans un autre, deuxième, étage de compression (6) pour produire un fluide sous pression comprimé (L3) (St2.4) et est fourni par le compresseur multi-étagé (4) (St2.5), ou
- fournit un fluide sous pression de compression (L6) (St1.1), qui est obtenu par une compression supplémentaire d'un fluide sous pression de suralimentation (A) déjà comprimé provenant du réservoir de fluide sous pression (20) ou des chambres de fluide sous pression (3.i ; i=l,...4) de l'installation de régulation de pression (1), dans lequel le fluide sous pression de compression (L6) est fourni par le compresseur multi-étagé (4) sans compression supplémentaire par le deuxième étage de compression (6) pour adapter la puissance de compression du deuxième étage de compression (6), lorsqu'au moins le premier étage de compression (5) comprime en outre le fluide sous pression de suralimentation (A).

2. Procédé selon la revendication 1, **caractérisé en ce que** le fluide sous pression de compression (L6) est guidé autour du deuxième étage de compression (6) dans une conduite de dérivation (25) contournant le deuxième étage de compression (6) pour empêcher une autre compression du fluide sous pression de compression (L6) par le deuxième étage de compression (6).

3. Procédé selon la revendication 2, **caractérisé en ce que** la conduite de dérivation (25) débouche dans une conduite de sortie (16) et le fluide sous pression de compression (L6) est fourni au réservoir de fluide sous pression (20) ou aux chambres de fluide sous pression (3.i ; i=l,...4) de l'installation de régulation de pression (1) via la conduite de sortie (16) avec ou sans séchage supplémentaire dans un dessiccateur d'air (17).

4. Procédé selon l'une des revendications précédentes, **caractérisé en ce qu'**en fonction d'une position de commutation d'une soupape de déviation (26), soit le fluide sous pression pré-comprimé (L2) est refoulé à partir du premier étage de compression (5) via un volume intermédiaire (13) jusqu'au deuxième étage de compression (6), soit le fluide sous pression de compression (L6) est guidé autour du deuxième étage de compression (6) à partir du premier étage de compression (5) via le volume intermédiaire (13).

5. Procédé selon la revendication 4, **caractérisé en ce que** la position de commutation de la soupape de déviation (26) est prédéfinie électriquement en fonction d'un signal de commande (S) ou pneumatiquement en fonction d'une pression de suralimentation (pA) du fluide sous pression de suralimentation (A), le signal de commande (S) ou la pression de suralimentation (pA) prédéfinissant si le premier étage de compression (5) fournit un fluide sous pression pré-comprimé (L2) ou un fluide sous pression de compression (L6).

6. Procédé selon la revendication 5, **caractérisé en ce que** dès qu'une ouverture d'une soupape de commutation (22a, 22b) et donc une libération du fluide sous pression de suralimentation (A) dans le premier étage de compression (5) a lieu,
- un signal de commande (S) est délivré, lequel commute électriquement la soupape de déviation (26), ou
- le fluide sous pression de suralimentation (A) commute pneumatiquement la soupape de déviation (26),
le fluide sous pression de compression (L6) étant guidé autour du deuxième étage de compression (6) via le volume intermédiaire (13) dans la position commutée de la soupape de déviation (26).

7. Procédé selon la revendication 5 ou 6, **caractérisé en ce que** dans le cas d'une soupape de commutation fermée (22a, 22b) et donc d'une compression de l'air d'admission (L1) par le premier étage de compression (6), la soupape de déviation (26) adopte une position initiale dans laquelle le premier étage de compression (5) est relié au deuxième étage de compression (6) via le volume intermédiaire (13).

8. Procédé selon l'une des revendications précédentes, **caractérisé en ce qu'**un afflux d'air d'admission (L1) dans le premier étage de compression (5) est empêché lorsque, pour la compression supplémentaire, le fluide sous pression de suralimentation (A) est introduit dans le premier étage de compression (5) et un fluide sous pression de compression (L6) est fourni par le premier étage de compression (5).

9. Installation de régulation de pression (1), en particulier pour un véhicule (200), comprenant au moins :
un compresseur multi-étagé (4) doté d'au moins un premier étage de compression (5) pour la fourniture d'un fluide sous pression pré-comprimé (L2) ou d'un fluide sous pression de compression (L6) et d'un deuxième étage de compression (6) pour la fourniture d'un fluide sous pression comprimé (L3), dans laquelle le premier étage de compression (5) et le deuxième étage de compression (6) sont reliés l'un à l'autre par le biais d'un volume intermédiaire (13),
au moins une chambre de fluide sous pression (3.i ; i=1...4) reliée au deuxième étage de compression (6),
un réservoir de fluide sous pression (20) relié au deuxième étage de compression (6) pour le stockage du fluide sous pression comprimé (L3) ou du fluide sous pression de compression (L6), dans laquelle le fluide sous pression de compression (L6) résulte d'une compression supplémentaire, provoquée par le premier étage de compression (5), du fluide sous pression (L4) stocké déjà comprimé ou du fluide sous pression de chambre (L5) déjà comprimé, dans laquelle une soupape de déviation (26) pouvant être commandée électriquement ou pneumatiquement est disposée dans le volume intermédiaire (13), dans laquelle la soupape de déviation (26) fait en sorte qu'en cas de fourniture du fluide sous pression pré-comprimé (L2) au moyen du premier étage de compression (5), le premier étage de compression (5) peut être relié au deuxième étage de compression (6) pour introduire le fluide sous pression pré-comprimé (L2) dans le deuxième étage de compression (6),
**caractérisée en ce**
**qu'**une conduite de suralimentation (23), qui relie le réservoir de fluide sous pression (20) ou l'au moins une chambre de fluide sous pression (3.i) au premier étage de compression (5), pour faire fonctionner l'installation de régulation de pression (1) avec du fluide sous pression (L4) stocké dans le réservoir de fluide sous pression (20) ou pour renvoyer un fluide sous pression de chambre (L5) utilisé dans les chambres de fluide sous pression (3.i) dans le réservoir de fluide sous pression (20), et la soupape de déviation (26) faisant en sorte qu'en cas de fourniture du fluide sous pression de compression (L6) au moyen du premier étage de compression (5), le premier étage de compression (5) peut être relié à une conduite de dérivation (25) contournant le deuxième étage de compression (6) pour le contournement et la coupure pneumatique du deuxième étage de compression (6).

10. Installation de régulation de pression (1) selon la revendication 9, **caractérisée en ce que** la soupape de déviation (26) est une soupape à 3/2 voies.

11. Installation de régulation de pression (1) selon la revendication 9 ou 10, **caractérisée en ce qu'**un signal de commande électrique (S) peut être transmis à la soupape de déviation (26) par le biais d'une entrée de commande électrique (26.1b) ou une pression de suralimentation pneumatique (pA) peut être transmise à la soupape de déviation par le biais d'une entrée de commande pneumatique (26.1a), le signal de commande électrique (S) ou la pression de suralimentation pneumatique (pA) permettant de prédéfinir si le premier étage de compression (5) fournit un fluide sous pression pré-comprimé (L2) ou un fluide sous pression de compression (L6).

12. Installation de régulation de pression (1) selon l'une des revendications 9 à 11, **caractérisée en ce que** le premier étage de compression (5) comprend une première soupape d'admission (11), au moyen de laquelle de l'air d'admission (L1) peut être introduit dans le premier étage de compression (5), la première soupape d'admission (11) étant réalisée de telle sorte qu'une introduction d'air d'admission (L1) dans le premier étage de compression (5) est empêchée dans le cas où le fluide sous pression de suralimentation (A) est introduit dans le premier étage de compression (6).

13. Installation de régulation de pression (1) selon l'une des revendications 9 à 12, **caractérisée en ce que** l'installation de régulation de pression (1) comprend en outre un dessiccateur d'air (17), le dessiccateur d'air (17) étant disposé en aval du compresseur multi-étagé (4) dans le sens d'écoulement pour le séchage du fluide sous pression comprimé (L3) et la conduite de dérivation (25) débouchant en amont du dessiccateur d'air (17) dans une conduite de sortie (16) pour le séchage supplémentaire du fluide sous pression de compression (L6) ou débouchant en aval du dessiccateur d'air (17) dans la conduite de sortie (16).

14. Installation de régulation de pression (1) selon l'une des revendications 9 à 13, **caractérisée en ce qu'**un premier diamètre (D1) du premier étage de compression (5) est supérieur à un deuxième diamètre (D2) du deuxième étage de compression (6).

15. Installation de régulation de pression (1) selon l'une des revendications 9 à 14, **caractérisée en ce que** la soupape de déviation (26) ainsi que la conduite de dérivation (25) sont intégrées dans un carter de compresseur (29), par exemple dans un couvercle de compresseur (28), du compresseur multi-étagé (4).

16. Installation de régulation de pression (1) selon l'une des revendications 9 à 15, **caractérisée en ce que** l'installation de régulation de pression (1) est une installation de suspension pneumatique (1) dans un véhicule (200), en particulier dans une voiture particulière (200).

17. Véhicule (200), en particulier voiture particulière (200), comprenant une installation de régulation de pression (1) selon l'une des revendications 9 à 16 pour la mise en œuvre du procédé selon l'une des revendications 1 à 8.
